# EUROPEAN PATENT APPLICATION

(11) **EP 4 549 267 A1**
(43) Date of publication of application: **07.05.2025**
(21) Application number: 23383121.3
(22) Date of filing: 03.11.2023
(51) Int. Cl.: B60T 11/16, B62L 3/02

(54) **ACTUATION DEVICE FOR HYDRAULICALLY ACTUATING A BRAKE OR CLUTCH OF A VEHICLE**

(71) Applicant: J.Juan S.A., 08850 Gavà , Barcelona (ES)
(72) Inventor: CEPRIAN CORTES, Juan Manuel, 08980 Sant Feliu de Llobregat (ES)
(74) Representative: Clarke, Modet y Cía., S.L.

(57) **Abstract**

An actuation device for hydraulically actuating a brake or a clutch of a vehicle, comprising a pump assembly (2) and an idle stroke adjustment device (3). A piston (23) is configured to slide inside a chamber (22) disposed within a pump body (21) along a pump actuating direction (X-X). The piston (23) is at least movable from a resting position (P1) to an operating position (P2), between which is defined a stroke free play (d1). The idle stroke adjustment device (3) comprises an idle stroke adjusting body (31) connected to the piston (23), movable along an idle stroke adjusting direction (X'-X') which is parallel to the pump actuating direction (X-X), wherein the movement of the idle stroke adjusting body (31) along the idle stroke adjusting direction (X'-X') causes the movement of the piston (23) along the pump actuating direction (X-X) to increase or decrease the stroke free play (d1).

## Description

### Field of the invention

The present invention relates to an actuation device for hydraulically actuating a brake or a clutch of a vehicle, such as a motorcycle, bicycle, utility task vehicle (UTV), side-by-side vehicle (SSV), among other vehicles in general equipped with a pump assembly (or master cylinder assembly).

The present invention is specially designed to optimise the adjustment of the idle stroke related to said pump assemblies, so that the adjustment is performed in a quicker and more efficient manner, and without being affected by the adjustment of other parameters that can be associated with the actuation device, such as the ratio adjustment.

### Background of the invention

The hydraulic actuation of a brake or a clutch for the mentioned vehicles is normally performed by operating a pump assembly (or master cylinder assembly). Generally, such pump assembly comprises a chamber disposed within a pump body for housing an actuation fluid of the brake or clutch, and a piston configured to slide inside said chamber along a pump actuating direction. The piston is configured to move from a resting position wherein the volume of the chamber is maximum, to an operating position wherein the piston fluidly isolates the chamber from a supply channel configured to supply the actuation fluid to the chamber. Once the supply channel is isolated, the movement of the piston pressurises the fluid within the chamber, which in turn exerts the necessary pressure to actuate the brake or a clutch of the vehicle.

A stroke free play is defined between the resting position and the operating position of the piston. From the resting position to the operating positing (or to the moment before the supply channel is isolated) no pressure is transmitted to the brake or clutch. By adjusting the stroke free play, the brake or clutch may be actuated instantly, or slightly delayed according to what the driver desires or needs. Therefore, the adjustment of the idle stroke is fundamental to obtain the best performance of the actuation device.

Document WO2018/083578A1 refers to a lever device focusing on the need to adjust the idle stroke in a simple and reliable manner. Said lever device comprises a pump body delimiting a cavity, and a piston suitable for sliding inside said cavity along a direction of thrust. The lever device further comprises a stroke free play adjustment device actuated in a direction of actuation which is perpendicular to the direction of thrust. The stroke free play adjustment device is arranged between a control lever assembly and the pump body. The control lever assembly comprises a portion of hub associated with the stroke free play adjustment device, which extends between sad portion hub and an abutment surface of the pump body. The stroke free play adjustment device comprises an eccentric rod, e.g., having a cam profile, which abuts against the abutment surface of the pump body. By turning the eccentric rod, the stroke free play is indirectly adjusted trough an element for transmitting the thrust action interposed between the piston and the control lever assembly.

Despite of the improvements provided by the mentioned lever device, some drawbacks are observed. To begin with, the direction of actuation of the stroke free play adjustment device is perpendicular to the direction of thrust, thus generating forces in a perpendicular direction to a plane containing those directions, which affect the optimum kinetic properties of the device. In addition, the adjustment of the position of the piston is carried out indirectly, transmitting a movement over the same through many components (abutment surface of the pump body, eccentric rod, portion hub, element for transmitting the thrust, push rod seat...) and further involving the control lever assembly. Thus, requiring a more precise design and manufacturing, because the greater the number of components, the greater the chain of tolerances. In addition, it is also noted that the stroke free play adjustment device is located between the control lever assembly and the pump assembly, with part of its components disposed on the control lever assembly. So, the performance of the stroke free play adjustment device depends on the control lever assembly, which may affect the adjustment of other parameters related to the control lever assembly, such as the ratio adjustment. On this regard, it is observed that if the lever assembly is replaced with a new one, or disassembled for maintenance purposes, it will be necessary to readjust again the stroke free play to leave it as it was before removing the previous lever assembly.

The present invention solves the aforementioned problems by means of an actuation device having an idle stroke adjustment device which design optimises its kinetic performance, it allows to actuate directly on the piston, it is independent on other adjustments associated to the actuation device (such as the ratio adjustment), it allows the quick replacement of a lever assembly without needing to readjust the current setup, and it is easily and manually operated without needing tools. Thus, facilitating the adjustment of the idle stroke to obtain the best performance of the actuation device, and to adapt it to the driver's preferences (sensibility, ergonomics, riding style...) or to certain driving conditions (track, low friction, racing, weather conditions...).

### Description of the invention

The actuation device for hydraulically actuating a brake or a clutch of a vehicle of the present invention comprises a pump assembly and an idle stroke adjustment device.

The pump assembly comprises a chamber disposed within a pump body for housing an actuation fluid of the brake or clutch, and a piston configured to slide inside said chamber along a pump actuating direction. The piston is at least movable from a resting position wherein the volume of the chamber is maximum, to an operating position wherein the piston fluidly isolates the chamber from a supply channel configured to supply the actuation fluid to the chamber. A stroke free play is defined between the resting position and the operating position of the piston.

The idle stroke adjustment device is configured to adjust the resting position of the piston inside the chamber to increase or decrease the stroke free play.

The actuation device is characterized in that the idle stroke adjustment device comprises an idle stroke adjusting body connected to the piston, movable along an idle stroke adjusting direction which is parallel to the pump actuating direction, wherein the movement of the idle stroke adjusting body along the idle stroke adjusting direction causes the movement of the piston along the pump actuating direction to increase or decrease the stroke free play.

That is to say, the movement of the idle stroke adjusting body generates a pushing force on the piston, which is also parallel to the pump actuating direction and to the idle stroke adjusting direction. So, no other forces are generated perpendicularly to the mentioned directions. Thus, improving the kinetic properties of the actuation device.

Preferably, the idle stroke adjusting body is directly connected to the piston. In this way, the pushing force which acts on the piston is transmit in a more efficient manner, as it is not transmitted indirectly through other intermediate components which may generate friction forces or undesirable reaction forces. In addition, as the presence of said intermediate components is avoided, the chain of tolerances is also reduced, thus, facilitating the design and manufacturing of the actuation device.

Preferably, the adjusting body is nut shaped, comprising an extension joined to the piston.

Preferably, the idle stroke adjustment device is housed in the pump body. More preferably within a housing of the pump body specially designed for lodging the main components of idle stroke adjustment device. In this way, a more compact and simple design of the actuation device is obtained.

Preferably, the idle stroke adjustment device is manually operated without needing tools. Thus, allowing to easily operate the idle stroke adjustment device. Even allowing the idle stroke adjustment to expert users while riding during competition and/or race conditions.

Preferably, the idle stroke adjustment device is rotatably actuated about a pivot axis coincident with the idle stroke adjusting direction. Thus, also improving the kinetic properties of the actuation device. In addition, actuating the idle stroke adjustment device by rotation facilitates its handling by the user and it allows to achieve a more precise adjustment.

Preferably, the idle stroke adjustment device comprises a knob joined to the adjusting screw for manually transmit a rotational movement to said idle stroke adjusting screw without the need for tools.

Preferably, the idle stroke adjustment device comprises an idle stroke adjusting screw threaded to the idle stroke adjusting body, wherein the rotation of the idle stroke adjusting screw about the pivot axis causes the movement of the idle stroke adjusting body along the idle stroke adjusting direction.

Preferably, the idle stroke adjustment device comprises an eccentric rod perpendicular to the idle stroke adjusting screw attached to the pump body, and a calibration portion joined to the idle stroke adjusting screw having a circular groove configured to receive the eccentric rod. The rotation of the eccentric rod allows the movement of the idle stroke adjusting body along the idle stroke adjusting direction to calibrate the stroke free play in the operating position of the piston. Thus, allowing a fine adjustment of the minimum stroke free play.

Preferably, the eccentric rod comprises a threaded end configured to be threaded on the pump body. That is, the eccentric rod is attached to the pump body, being able to rotate with respect to the same to allow the fine adjustment of the minimum stroke free play. The eccentric rod is configured to set a minimum stroke free play which cannot be exceeded when the stroke free play is being adjusted. In addition, the user may always return to the minimum stroke free play of the actuation device by completely rotating the eccentric rod in a specific direction.

Preferably, the eccentric rod comprises a cylindric end configured to be lodged on a holding cap while allowing its rotation. Preferably, the holding cap is externally threaded, to be threaded in turn onto the pump body. In this way, the eccentric rod is attached to the pump body both through the threaded end and through the cylindric end, thus better securing its attachment to the pump body and establishing a more stable and reliable position of the same in relation to the idle stroke adjusting body.

Preferably, the idle stroke adjustment device comprises:
- a locking pin configured to abut on one or more recesses arranged on the idle stroke adjusting screw; and
- a first preloaded spring having a fixed end in contact with the idle stroke adjusting body or the pump body, and a pushing end in contact with the locking pin.

The first preloaded spring is configured to push the locking pin against said one or more recesses to secure the idle stroke adjusting screw once the stroke free play has been adjusted. That is, avoiding an undesirable free play of the idle stroke adjusting screw once the adjustment is made.

Preferably, the adjusting body comprises a sleeve for housing the first preloaded spring. So, the fixed end of the first preloaded spring is in contact with the bottom of the sleeve.

Preferably, the actuation device comprises a lever portion for actuating the pump assembly through a pushing rod configured to push the piston. The lever portion comprises:
- a lever body having a handle; and
- a circular housing or hole arranged on the lever body defining a central axis, said circular housing or hole configured to receive the pushing rod and to allow the rotation of the same about said central axis to push the piston when the handle is pressed.

Preferably, the actuation device comprises a ratio adjustment device arranged on the lever portion. The ratio adjustment device comprises:
- a slotted hole arranged on the lever body, defining a ratio adjusting direction which is perpendicular to the central axis; and
- a ratio adjusting body configured to move along the ratio adjusting direction for varying its relative position with respect to the handle, defining a ratio adjusting axis parallel to the central axis.

A ratio adjusting distance is defined between the central axis and the ratio adjusting axis. The ratio adjustment device is configured to vary the ratio adjusting distance by moving the ratio adjusting body along the ratio adjusting direction.

Preferably, the ratio adjustment device is manually operated without needing tools.

Preferably, the ratio adjustment device comprises a ratio adjusting screw threaded to the ratio adjusting body, wherein the rotation of the ratio adjusting screw about the ratio adjusting direction causes the movement of the ratio adjusting body along said ratio adjusting direction.

Preferably, the ratio adjustment device comprises a knob joined to the ratio adjusting screw for manually transmit a rotational movement to said ratio adjusting screw without the need for tools.

Preferably, the ratio adjustment device comprises a shaft that crosses perpendicularly the ratio adjusting body through a pass-through hole disposed in said ratio adjusting body and through the slotted hole, wherein the ratio adjusting axis is the axis of the shaft.

Preferably, the ratio adjustment device comprises a spring having a first end in contact with the pump body and a second end in contact with a housing of the ratio adjusting body. The spring is preloaded to keep the pushing rod in contact with the piston at any time.

Preferably, the ratio adjustment device comprises:
- a locking ball configured to abut on one or more cavities arranged on the ratio adjusting screw; and
- a second preloaded spring having a fixed end in contact with the lever body and a pushing end in contact with the locking ball.

The second preloaded spring is configured to push the locking ball against the ratio adjusting screw to secure said ratio adjusting screw once the ratio adjusting distance has been adjusted.

Preferably, the pump actuating direction and the ratio adjusting direction are arranged on the same plane. Thus, improving the kinetic properties of the actuation device.

Preferably, the actuation device comprises a lever adjustment device arranged on the lever portion. The lever adjustment device comprises:
- a bushing lodged in the circular housing or hole, configured to rotate about the central axis of said circular housing or hole; and
- a threaded hole that crosses the bushing in a lever adjusting direction.

The pushing rod is threaded to said threaded hole. The rotation of the pushing rod about the lever adjusting direction causes its movement along said lever adjusting direction.

A lever adjusting distance is defined between the handle and a handle grip of the vehicle. The lever adjustment device is configured to vary the lever adjusting distance by moving the pushing rod along the lever adjusting direction.

Preferably, the lever adjustment device is manually operated without needing tools.

Preferably, the lever adjustment device comprises a knob joined to the pushing rod for manually transmit a rotational movement to said pushing rod without the need for tools.

Preferably, the pump actuating direction and the lever distance adjusting direction are arranged on the same plane. Thus, improving the kinetic properties of the actuation device.

Preferably, the lever portion is detachable from the pump assembly. In addition, as it has been said before, the lever portion may comprise a ratio adjustment device and/or a lever adjustment device arranged on the same, without having components of these adjustment devices located in the pump assembly. Therefore, the lever portion can be easily and quickly replaced with another lever portion on which the ratio adjustment device and/or the lever adjustment device are already adjusted as on the detached lever portion. Thus, without needing to readjust again these parameters after replacing the lever portion.

Preferably, the lever portion is manually detachable from the pump assembly without needing tool. Thus, making easier and quicker the replacement of the lever portion.

Preferably, the actuation device comprises a lever disassembling device configured to detach the lever portion from the pump assembly (2). The lever disassembling device comprises a retention clip configured to hold the shaft on the lever body by embracing said shaft with said retention clip, and to release it by pulling the retention clip.

In turn, the shaft comprises a retaining end having a retaining groove configured to receive the retention clip, and a releasing end having a protruding pin, wherein the shaft is configured to move along the ratio adjusting axis when the protruding pin is pressed.

Preferably, the shaft comprises a middle portion with a non-circular cross section, configured to fit in the pass-through hole of the ratio adjusting body to impede the rotation of the shaft about the ratio adjusting axis.

Preferably, the actuation device comprises an idle stroke adjustment device and a ratio adjustment device as described before, being both adjustment devices manually operated without needing tools.

Preferably, the actuation device comprises an idle stroke adjustment device and a lever adjustment device as described before, being both adjustment devices manually operated without needing tools.

Preferably, the actuation device comprises an idle stroke adjustment device, a ratio adjustment device and a lever adjustment device as described before, being all of them manually operated without needing tools.

### Brief description of the drawings

What follows is a very brief description of a series of drawings that aid in better understanding the invention, and which are expressly related to an embodiment of said invention that is presented by way of a non-limiting example of the same.
Figure 1 represents a front part of a motorcycle which comprises two actuation devices according to the present invention, one for hydraulically actuating a brake of said vehicle, and another one for hydraulically actuating a clutch of the same.
Figure 2 represents a perspective view of the actuation device of the present invention.
Figure 3 represents a partly sectioned perspective view of the actuation device of the present invention.
Figure 4 represents an exploded view of the idle stroke adjustment device of the actuation device of the present invention.
Figures 5a - 5c represents a sequence of detailed views around the supply channel of the pump assembly, showing the adjustment of the stroke free play from the resting position to the operating position.
Figure 6 represents a frontal longitudinal section of the actuation device of the present invention, with the piston in the resting position.
Figure 7 represents a side view of the actuation device of the present invention, with the piston in the resting position.
Figure 8 represents a frontal longitudinal section of the actuation device of the present invention, with the piston in the operating position.
Figure 9 represents a side view of the actuation device of the present invention, with the piston in the operating position.
Figure 10 represents a rear longitudinal section of the actuation device of the present invention, with the piston in the resting position.
Figure 11 represents the detail W of Figure 10.
Figure 12 represents a rear longitudinal section of the actuation device of the present invention, with the piston in the operating position.
Figure 13 represents the detail Z of Figure 12.
Figure 14 represents a partly sectioned perspective view of the actuation device of the present invention.
Figure 15 represents a perspective view of the lever portion of the actuation device of the present invention.
Figure 16 represents an exploded view of the lever portion of the actuation device of the present invention.
Figure 17a represents a cross-section of the ratio adjustment device along the ratio adjusting axis Q-Q, according to a first adjusting position of the ratio.
Figure 17b represents a cross-section of the ratio adjustment device along the ratio adjusting axis Q-Q, according to a second adjusting position of the ratio.
Figures 18a - 18c represent a sequence of longitudinal sections along the ratio adjusting direction R-R, showing the adjustment of the ratio adjusting distance.
Figure 19 represents a partly sectioned frontal view of the actuation device of the present invention.
Figure 20 represents a partly sectioned plan view of the actuation device of the present invention.
Figure 21 represents a perspective view of the lever adjustment device of the actuation device of the present invention.
Figures 22a - 22b represent a sequence of longitudinal sections along the lever adjusting direction S-S, showing the adjustment of the lever adjusting distance.
Figure 23 represents a sectioned perspective view of the lever disassembling device of the present invention.
Figures 24a - 24d represent a sequence of the steps for detaching the lever portion from the pump assembly.

### Detailed description of the invention

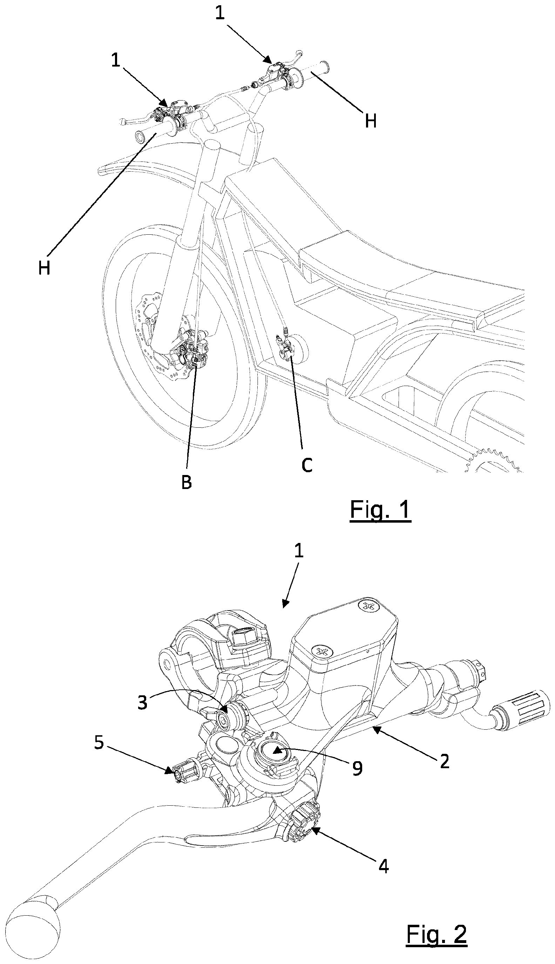

Figure 1 shows a part of a motorcycle which comprises two actuation devices (1) according to the present invention, one for hydraulically actuating a brake (B) and another one for hydraulically actuating a clutch (C) of said vehicle. Each actuation device (1) is arranged on a handle grip (H) of the vehicle

Figure 2 represents a perspective view of the actuation device (1) of the present invention, which can be used for hydraulically actuating the brake (B) or the clutch (C) of the vehicle, independently.

The actuation device (1) comprises a pump assembly (2) and an idle stroke adjustment device (3). According to the present example, the actuation device (1) further comprises a ratio adjustment device (4), a lever adjustment device (5) and a lever disassembling device (9).

The idle stroke adjustment device (3), the ratio adjustment device (4), the lever adjustment device (5) and the lever disassembling device (9) are all of them manually operated without needing tools.

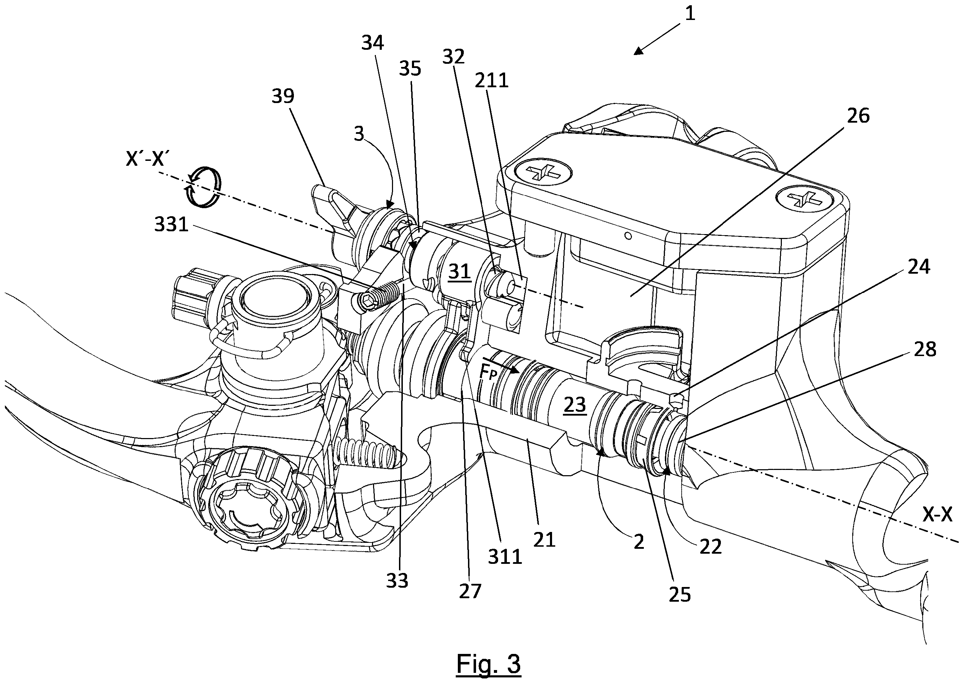

As can be seen in Fig. 3, the pump assembly (2) comprises a chamber (22) disposed within a pump body (21) for housing an actuation fluid of the brake (B) or clutch (C), and a piston (23) configured to slide inside said chamber (22) along a pump actuating direction (X-X).

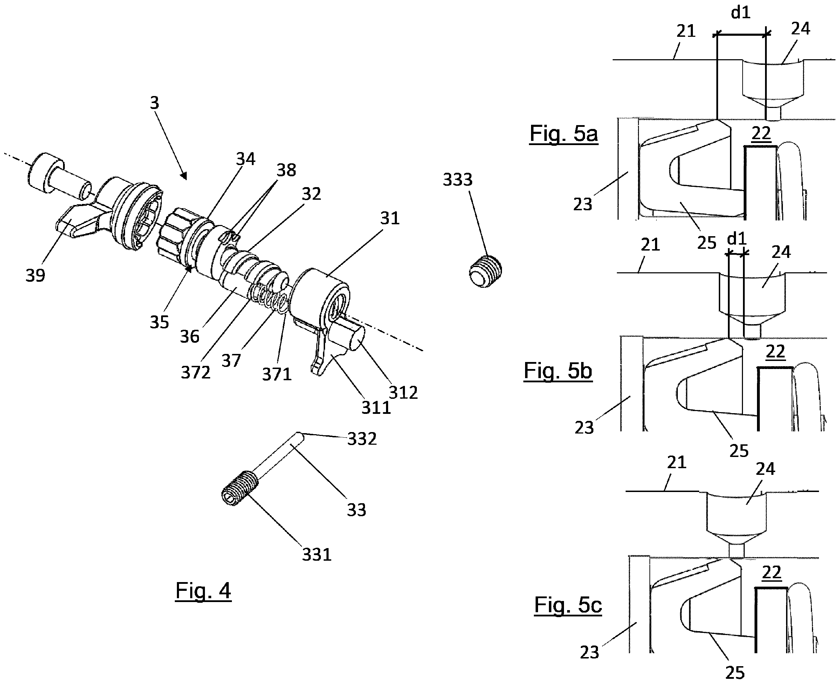

The piston (23) is at least movable from a resting position (P1) wherein the volume of the chamber (22) is maximum, to an operating position (P2) wherein the piston (23) fluidly isolates the chamber (22) from a supply channel (24) configured to supply the actuation fluid to the chamber (22). A stroke free play (d1) is defined between the resting position (P1) and the operating position (P2) of the piston (23), Figs 5a - 5c. The piston (23) comprises a gasket (25) configured to isolate the chamber (22), sealing the supply channel (24) which in turn is communicated with a deposit (26) containing the hydraulic fluid.

The idle stroke adjustment device (3) is configured to adjust the resting position (P1) of the piston (23) inside the chamber (22) to increase or decrease the stroke free play (d1).

The idle stroke adjustment device (3) comprises an idle stroke adjusting body (31) connected to the piston (23), movable along an idle stroke adjusting direction (X'-X') which is parallel to the pump actuating direction (X-X), wherein the movement of the idle stroke adjusting body (31) along the idle stroke adjusting direction (X'-X') causes the movement of the piston (23) along the pump actuating direction (X-X) to increase or decrease the stroke free play (d1).

That is to say, the movement of the idle stroke adjusting body (31) generates a pushing (Fp) on the piston (23), which is also parallel to the pump actuating direction (X-X) and the idle stroke adjusting direction (X'-X').

The idle stroke adjusting body (31) is directly connected to the piston (23). According to the present example, the adjusting body (31) is nut shaped and it comprises an extension (311) in contact with the piston (23). More specifically, the extension (311) is in contact with a perimetral wall (27) of the piston (23). When the idle stroke adjusting body (31) is moved forwards, the extension (311) pushes the perimetral wall (27) causing the piston (23) to move forwards along the pump actuating direction (X-X). When the idle stroke adjusting body (31) is moved backwards, the pump spring (28) inside the chamber (22) causes the piston (23) to move backwards along the pump actuating direction (X-X). The pump spring (28) keeps the idle stroke adjusting body (31) in contact with the piston (23), up to the moment the piston (23) fluidly isolates the chamber (22) from the supply channel (24).

The pump body (21) comprises a housing (211) located next to the piston (23), and just above the same, configured to house the idle stroke adjusting body (31).

The idle stroke adjustment device (3) is rotatably actuated about a pivot axis coincident with the idle stroke adjusting direction (X'-X').

The idle stroke adjustment device (3) comprises an idle stroke adjusting screw (32) threaded to the idle stroke adjusting body (31), wherein the rotation (R1) of the idle stroke adjusting screw (32) about the pivot axis causes the movement of the idle stroke adjusting body (31) along the idle stroke adjusting direction (X'-X').

The idle stroke adjustment device (3) comprises a knob (39) joined to the external end of the adjusting screw (32) for manually transmit a rotational movement to said idle stroke adjusting screw (32) without the need for tools.

The idle stroke adjustment device (3) comprises an eccentric rod (33) perpendicular to the idle stroke adjusting screw (32) attached to the pump body (21), and a calibration portion (34) joined to the idle stroke adjusting screw (32) having a circular groove (35) configured to receive the eccentric rod (33). The rotation of the eccentric rod (33) allows the movement of the idle stroke adjusting body (31) along the idle stroke adjusting direction (X'-X') to calibrate the stroke free play (d1) in the operating position (P2) of the piston (23). Thus, allowing a fine adjustment of the minimum stroke free play (d1).

The eccentric rod (33) comprises a threaded end (331) configured to be threaded on the pump body (21). That is, the eccentric rod (33) is attached to the pump body (21), being able to rotate with respect to the same to allow the fine adjustment of the minimum stroke free play (d1). The eccentric rod (33) is configured to set a minimum stroke free play (d1) which cannot be exceeded when the stroke free play (d1) is being adjusted. In addition, the user may always return to the minimum stroke free play (d1) of the actuation device (1) by completely rotating the eccentric rod (33) in a specific direction.

As can be seen in Fig. 4, the eccentric rod (33) comprises a cylindric end (332) configured to be lodged on a holding cap (333) while allowing its rotation. The holding cap (333) is externally threaded to be threaded onto the pump body (21). In this way, the eccentric rod (33) is attached to the pump body (21) both through the threaded end (331) and through the cylindric end (332), thus better securing its attachment to the pump body (21) and establishing a more stable and reliable position of the same in relation to the idle stroke adjusting body (31).

The idle stroke adjustment device (3) comprises:
- a locking pin (36) configured to abut on a plurality of recesses (38) arranged on the idle stroke adjusting screw (32); and
- a first preloaded spring (37) having a fixed end (371) in contact with the idle stroke adjusting body (31), and a pushing end (372) in contact with the locking pin (36).

The first preloaded spring (37) is configured to push the locking pin (36) against the recesses (38) to secure the idle stroke adjusting screw (32) once the stroke free play (d1) has been adjusted. That is, avoiding an undesirable free play of the idle stroke adjusting screw (32) once the adjustment is made.

The adjusting body (31) comprises a sleeve (312) for housing the first preloaded spring (37). So, the fixed end (371) of the first preloaded spring (37) is in contact with the inner bottom of the sleeve (312).

Figures 5a - 5c represents a sequence of detailed views around the supply channel (24) of the pump assembly (21), showing in more detail the adjustment of the stroke free play (d1) from the resting position (P1), Fig.5a, to the operating position (P2), Fig. 5c.

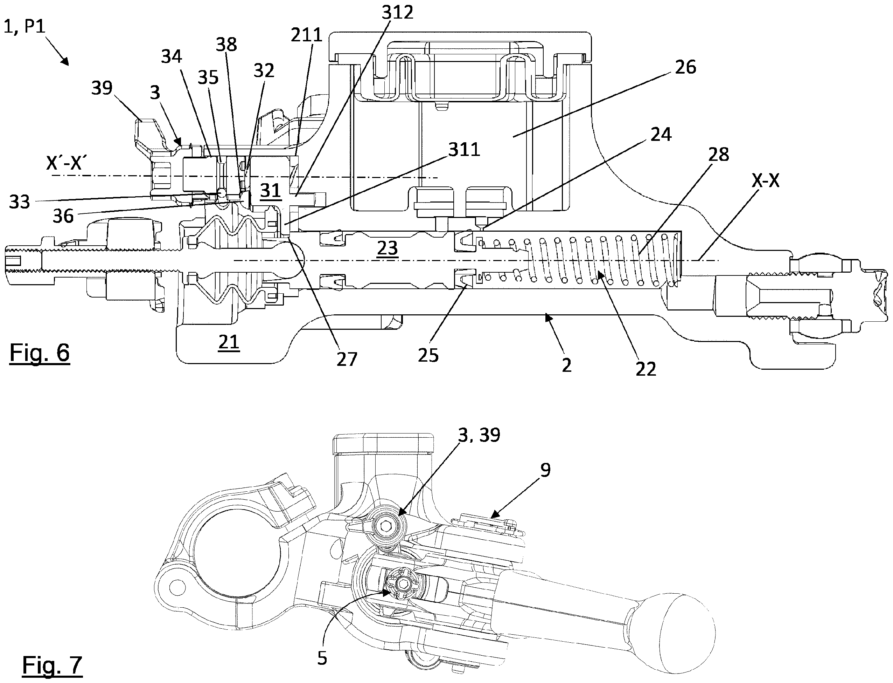

Figures 6 and 7 show respectively a frontal longitudinal section and a side view of the actuation device (1) with the piston (23) in the resting position (P1).

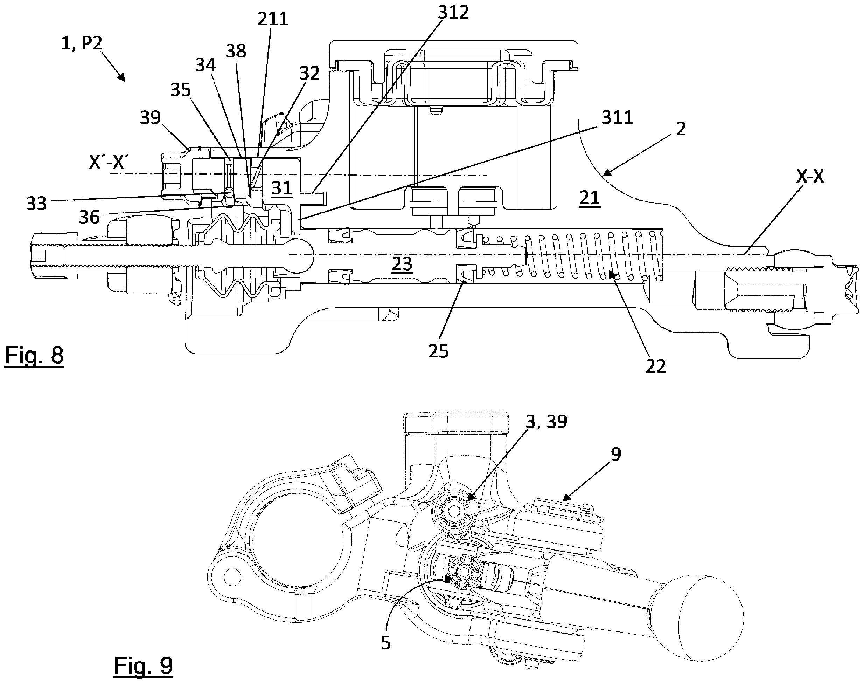

Figures 8 and 9 show respectively a frontal longitudinal section and a side view of the actuation device (1) with the piston (23) in the operating position (P2).

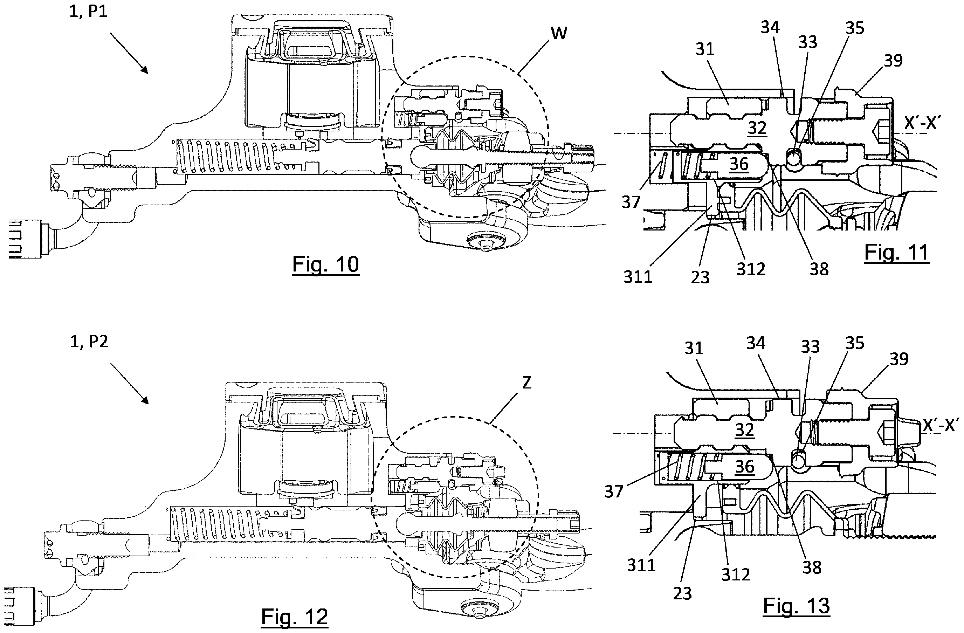

Figures 10 and 11 show respectively a rear longitudinal section and a detail W of the same of the actuation device (1) with the piston (23) in the resting position (P1).

As can be seen in more detail, the locking pin (36) abuts on one of the recesses (38) arranged on the idle stroke adjusting screw (32), pushed by the first preloaded spring (37) located within the sleeve (312) of the adjusting body (31), to secure the idle stroke adjusting screw (32) once the stroke free play (d1) has been adjusted.

Figures 12 and 13 show respectively a rear longitudinal section and a detail Z of the same of the actuation device (1) with the piston (23) in the operating position (P2).

As can be seen in more detail, the eccentric rod (33) is perpendicular to the idle stroke adjusting screw (32). The circular groove (35) of the calibration portion (34) joined to the idle stroke adjusting screw (32) receives said eccentric rod (33). The rotation of the eccentric rod (33) allows the movement of the idle stroke adjusting body (31) along the idle stroke adjusting direction (X'-X') to calibrate the stroke free play (d1) in the operating position (P2) of the piston (23). Thus, allowing a fine adjustment of the minimum stroke free play (d1).

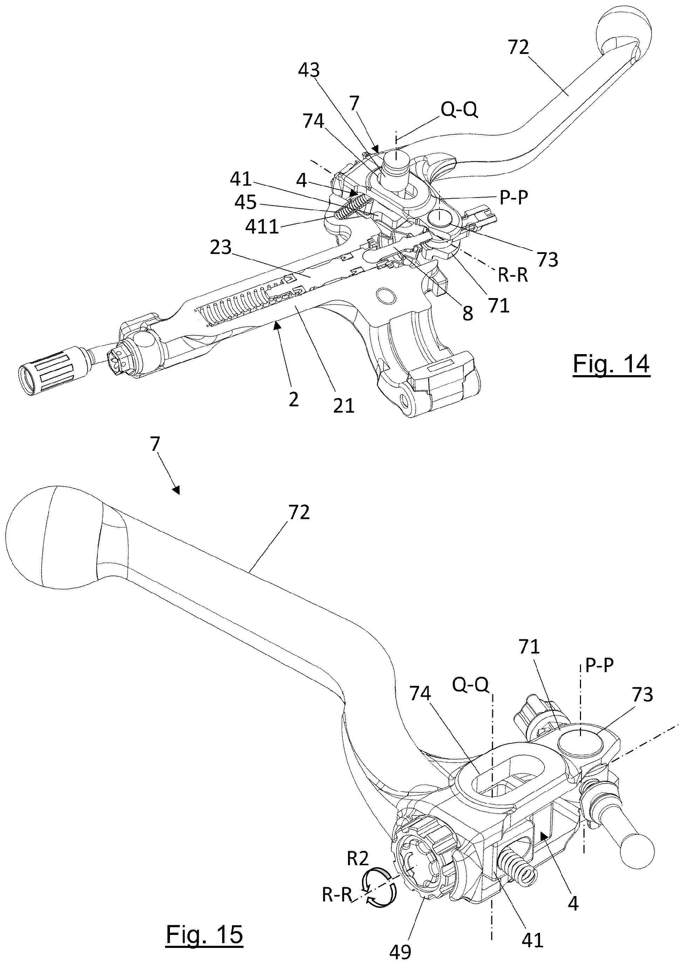

As can be seen in Figs. 14 and 15, the actuation device (1) comprises a lever portion (7) for actuating the pump assembly (2) through a pushing rod (8) configured to push the piston (23).

The lever portion (7) comprises:
- a lever body (71) having a handle (72); and
- a circular housing or hole (73) arranged on the lever body (71) defining a central axis (P-P), said circular housing or hole (73) configured to receive the pushing rod (8) and to allow the rotation of the same about said central axis (P-P) to push the piston (23) when the handle (72) is pressed.

The actuation device (1) comprises a ratio adjustment device (4) arranged on the lever portion (7), comprising:
- a slotted hole (74) arranged on the lever body (71), defining a ratio adjusting direction (R-R) which is perpendicular to the central axis (P-P); and
- a ratio adjusting body (41) configured to move along the ratio adjusting direction (R-R) for varying its relative position with respect to the handle (72), defining a ratio adjusting axis (Q-Q) parallel to the central axis (P-P).

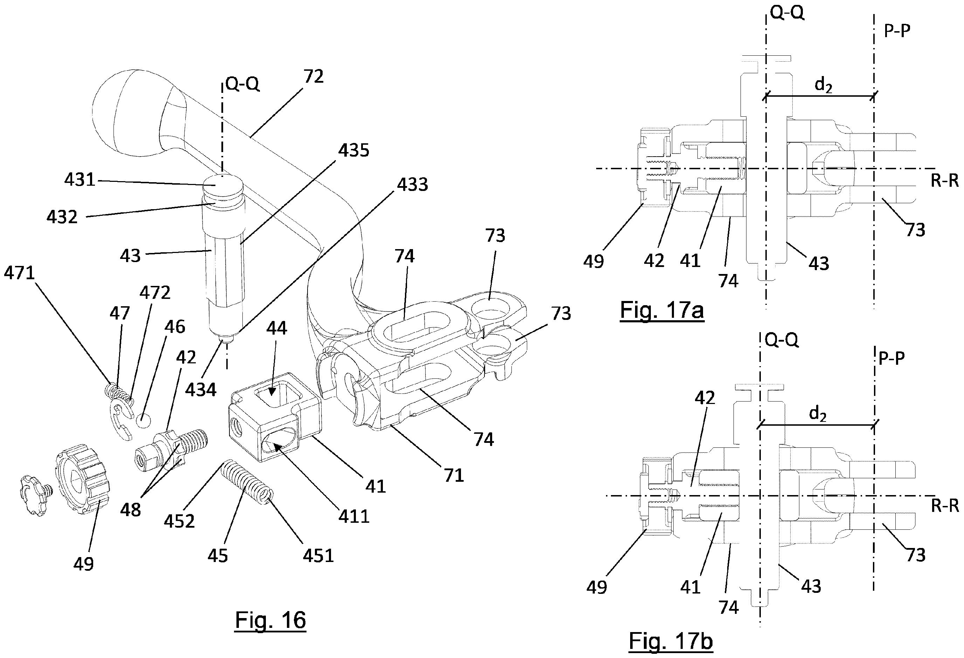

A ratio adjusting distance (d2) is defined between the central axis (P-P) and the ratio adjusting axis (Q-Q). The ratio adjustment device (4) is configured to vary the ratio adjusting distance (d2) by moving the ratio adjusting body (41) along the ratio adjusting direction (R-R), Figs 17a and 17b.

The ratio adjustment device (4) is manually operated without needing tools.

The ratio adjustment device (4) comprises a ratio adjusting screw (42), Fig. 16, threaded to the ratio adjusting body (41), wherein the rotation (R2) of the ratio adjusting screw (42) about the ratio adjusting direction (R-R) causes the movement of the ratio adjusting body (41) along said ratio adjusting direction (R-R).

The ratio adjustment device (4) comprises a knob (49) joined to the ratio adjusting screw (42) for manually transmit a rotational movement to said ratio adjusting screw (42) without the need for tools.

As can be seen in Fig. 16, the ratio adjustment device (4) comprises a shaft (43) that crosses perpendicularly the ratio adjusting body (41) through a pass-through hole (44) disposed in said ratio adjusting body (41) and through the slotted hole (74), wherein the ratio adjusting axis (Q-Q) is the axis of the shaft (43).

The ratio adjustment device (4) comprises a spring (45) having a first end (451) in contact with the pump body (21) and a second end (452) in contact with a housing (411) of the ratio adjusting body (41).

The ratio adjustment device (4) comprises:
- a locking ball (46) configured to abut on a plurality of cavities (48) arranged on the ratio adjusting screw (42); and
- a second preloaded spring (47) having a fixed end (471) in contact with the lever body (71) and a pushing end (472) in contact with the locking ball (46).

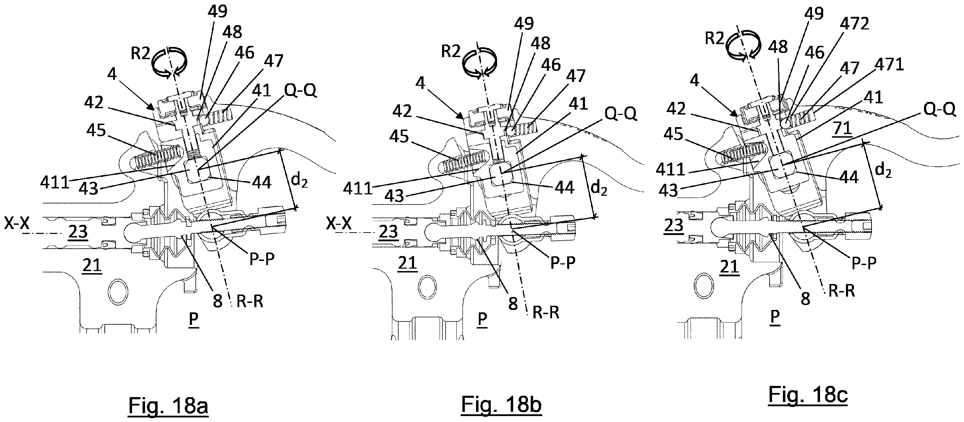

The second preloaded spring (47) is configured to push the locking ball (46) against the ratio adjusting screw (42) to secure said ratio adjusting screw (42) once the ratio adjusting distance (d2) has been adjusted, Figs. 18a - 18c.

Figures 17a - 17b and 18a - 18c show in more detail the adjustment of the ratio adjusting distance (d2).

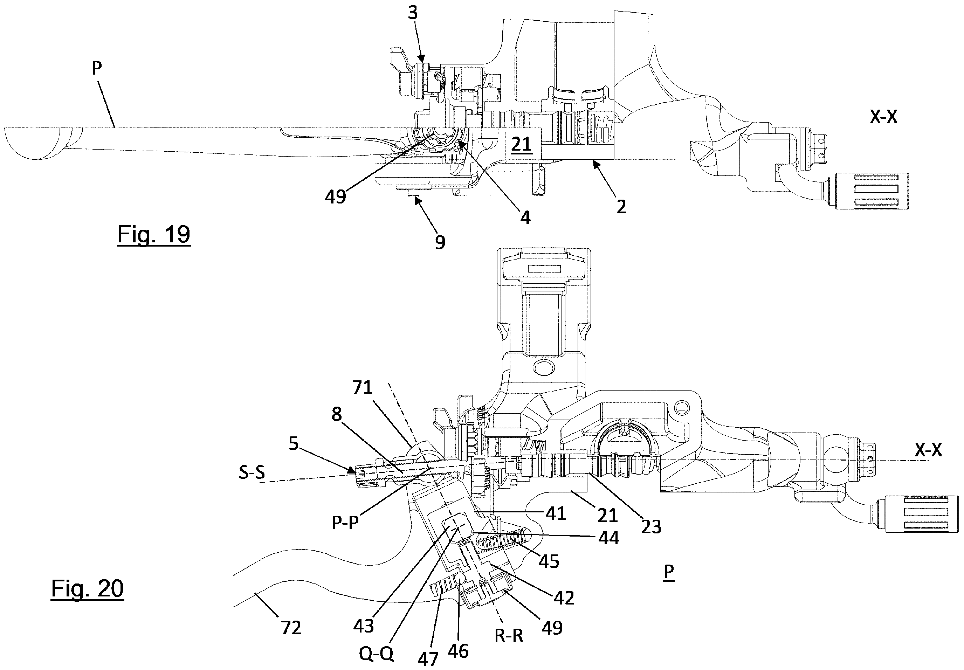

As can be seen in Figs. 19 and 20, the pump actuating direction (X-X) and the ratio adjusting direction (R-R) are arranged on the same plane (P). Thus, improving the kinetic properties of the actuation device (1).

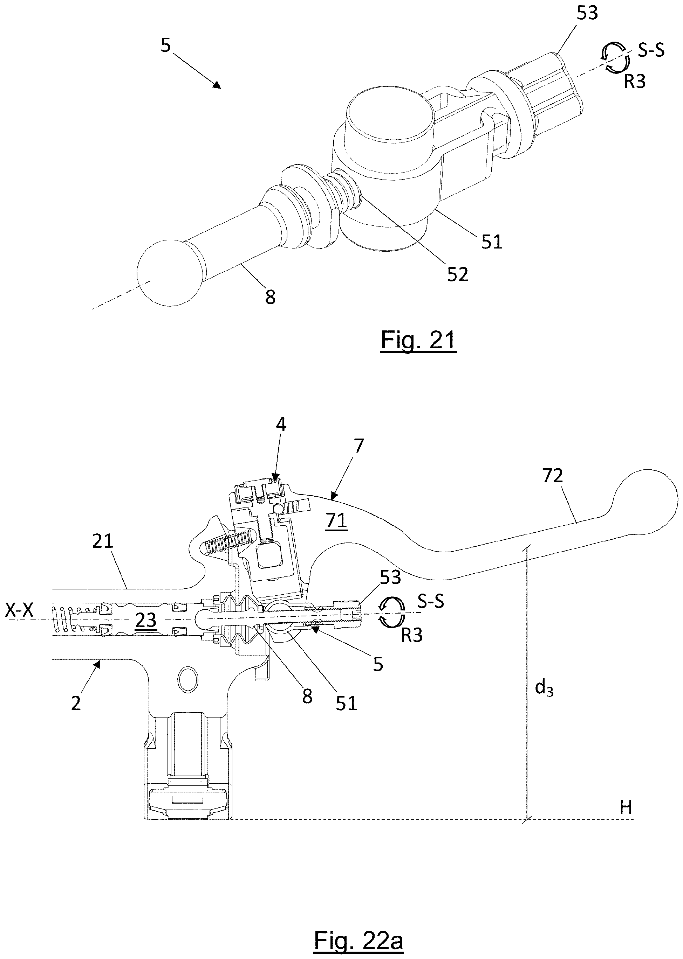

As can be seen in Fig. 21, the actuation device (1) comprises a lever adjustment device (5) arranged on the lever portion (7).

The lever adjustment device (5) comprises
- a bushing (51) lodged in the circular housing or hole (73), configured to rotate about the central axis (P-P) of said circular housing or hole (73); and
- a threaded hole (52) that crosses the bushing (51) in a lever adjusting direction (S-S), wherein the pushing rod (8) is threaded to said threaded hole (52); wherein the rotation (R3) of the pushing rod (8) about the lever adjusting direction (S-S) causes its movement along said lever adjusting direction (S-S).

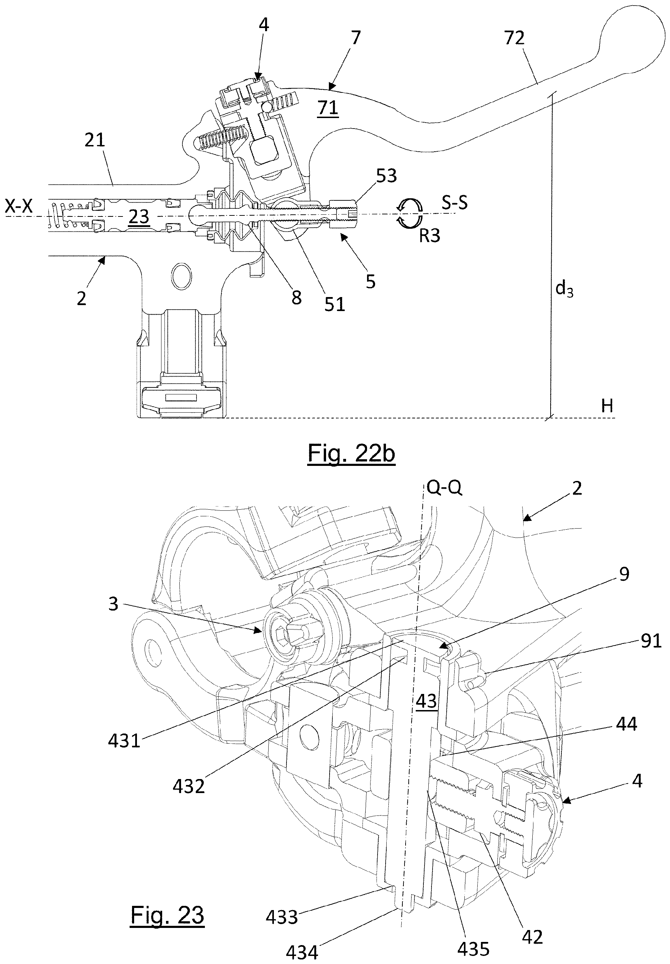

As can be seen in Figs. 22a - 22b, a lever adjusting distance (d3) is defined between the handle (72) and a handle grip (H) of the vehicle. The lever adjustment device (5) is configured to vary the lever adjusting distance (d3) by moving the pushing rod (8) along the lever adjusting direction (S-S).

The lever adjustment device (5) is manually operated without needing tools.

The lever adjustment device (5) comprises a knob (53) joined to the pushing rod (8) for manually transmit a rotational movement to said pushing rod (8) without the need for tools.

The pump actuating direction (X-X) and the lever distance adjusting direction (S-S) are arranged on the same plane (P). Thus, improving the kinetic properties of the actuation device (1).

As can be seen in Fig. 23, the actuation device (1) comprises a lever disassembling device (9) configured to detach the lever portion (7) from the pump assembly (2). The lever portion (7) is manually detachable from the pump assembly (2) without needing tool. Thus, making easier and quicker the replacement of the lever portion (7).

The lever disassembling device (9) comprises a retention clip (91) configured to hold the shaft (43) on the lever body (71) by embracing said shaft (43) with said retention clip (91), and to release it by pulling the retention clip (91).

In turn, the shaft (43) comprises a retaining end (431) having a retaining groove (432) configured to receive the retention clip (91), and a releasing end (433) having a protruding pin (434), wherein the shaft (43) is configured to move along the ratio adjusting axis (Q-Q) when the protruding pin (434) is pressed.

The shaft (43) comprises a middle portion (435) with a non-circular cross section, configured to fit in the pass-through hole (44) of the ratio adjusting body (41) to impede the rotation of the shaft (43) about the ratio adjusting axis (Q-Q).

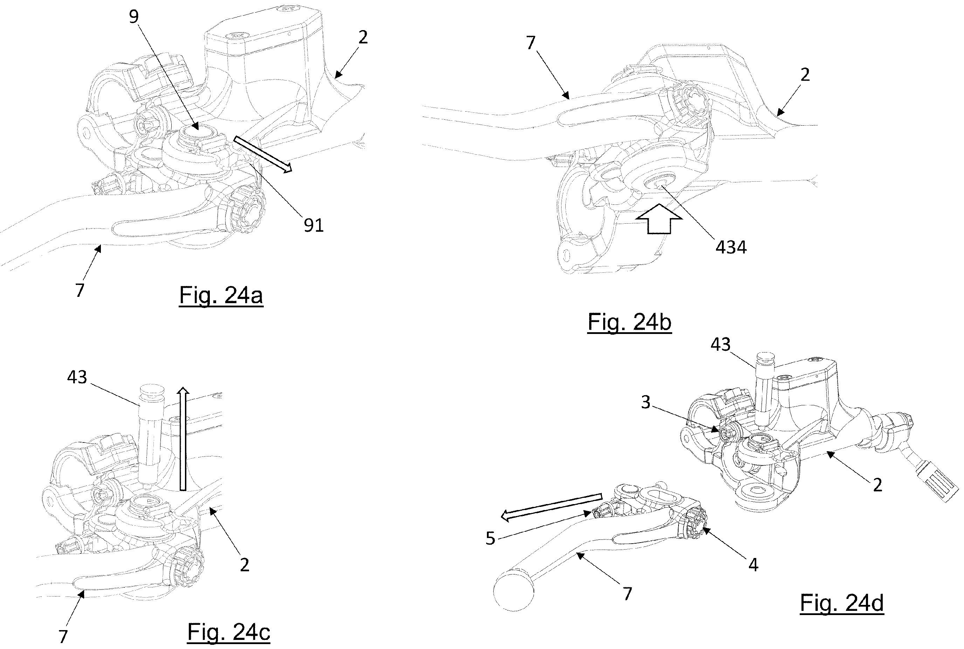

Figures 24a - 24d show a sequence of the steps for detaching the lever portion (7) from the pump assembly (2). The first step is pulling the retention clip (91) simply using the fingers, so the shaft (43) is released from the lever disassembling device (9), Fig. 24a. The next step is pushing upwards the shaft (43) by pressing the protruding pin (434), which can be made also with the hand, Fig. 24b. The next step is extracting the shaft (43) from the lever portion (7) by pulling the same with the hand, Fig. 24c. Finally, the lever portion (7) is fully detached from the pump assembly (2) by pulling the same with the hand.

The lever portion (7) comprises the ratio adjustment device (4) and the lever adjustment device (5) arranged on said lever portion (7), without having components of these adjustment devices (4, 5) located in the pump assembly (2). Therefore, the lever portion (7) can be easily and quickly replaced with another lever portion (7) on which the ratio adjustment device (4) and/or the lever adjustment device (5) are already adjusted as on the detached lever portion (7). Thus, without needing to readjust again these parameters after replacing the lever portion (7).

## Claims

1. An actuation device for hydraulically actuating a brake or a clutch of a vehicle, comprising:
- a pump assembly (2) having a chamber (22) disposed within a pump body (21) for housing an actuation fluid of the brake (B) or clutch (C), and a piston (23) configured to slide inside said chamber (22) along a pump actuating direction (X-X); wherein said piston (23) is at least movable from a resting position (P1) wherein the volume of the chamber (22) is maximum, to an operating position (P2) wherein the piston (23) fluidly isolates the chamber (22) from a supply channel (24) configured to supply the actuation fluid to the chamber (22); wherein a stroke free play (d1) is defined between the resting position (P1) and the operating position (P2) of the piston (23); and
- an idle stroke adjustment device (3) configured to adjust the resting position (P1) of the piston (23) inside the chamber (22) to increase or decrease the stroke free play (d1);
said actuation device (1) being **characterized in that** said idle stroke adjustment device (3) comprises an idle stroke adjusting body (31) connected to the piston (23), movable along an idle stroke adjusting direction (X'-X') which is parallel to the pump actuating direction (X-X), wherein the movement of the idle stroke adjusting body (31) along the idle stroke adjusting direction (X'-X') causes the movement of the piston (23) along the pump actuating direction (X-X) to increase or decrease the stroke free play (d1).

2. The actuation device according to claim 1 **characterized in that** the idle stroke adjusting body (31) is directly connected to the piston (23).

3. The actuation device according to any of claims 1 to 2 **characterized in that** the idle stroke adjustment device (3) is housed in the pump body (21).

4. The actuation device according to any of claims 1 to 3 **characterized in that** the idle stroke adjustment device (3) is manually operated without needing tools.

5. The actuation device according to any of claims 1 to 4 **characterized in that** the idle stroke adjustment device (3) is rotatably actuated about a pivot axis coincident with the idle stroke adjusting direction (X'-X').

6. The actuation device according to claim 5 **characterized in that** the idle stroke adjustment device (3) comprises an idle stroke adjusting screw (32) threaded to the idle stroke adjusting body (31), wherein the rotation (R1) of the idle stroke adjusting screw (32) about the pivot axis causes the movement of the idle stroke adjusting body (31) along the idle stroke adjusting direction (X'-X').

7. The actuation device according to claim 6 **characterized in that** the idle stroke adjustment device (3) comprises:
- an eccentric rod (33) perpendicular to the idle stroke adjusting screw (32) attached to the pump body (21); and
- a calibration portion (34) joined to the idle stroke adjusting screw (32) having a circular groove (35) configured to receive the eccentric rod (33); wherein the rotation of the eccentric rod (33) allows the movement of the idle stroke adjusting body (31) along the idle stroke adjusting direction (X'-X') to calibrate the stroke free play (d1) in the operating position (P2) of the piston (23).

8. The actuation device according to any of claims 1 to 7 **characterized in that** it comprises a lever portion (7) for actuating the pump assembly (2) through a pushing rod (8) configured to push the piston (23), comprising:
- a lever body (71) having a handle (72); and
- a circular housing or hole (73) arranged on the lever body (71) defining a central axis (P-P), said circular housing or hole (73) configured to receive the pushing rod (8) and to allow the rotation of the same about said central axis (P-P) to push the piston (23) when the handle (72) is pressed.

9. The actuation device according to claim 8 **characterized in that** it comprises a ratio adjustment device (4) arranged on the lever portion (7), comprising:
- a slotted hole (74) arranged on the lever body (71), defining a ratio adjusting direction (R-R) which is perpendicular to the central axis (P-P); and
- a ratio adjusting body (41) configured to move along the ratio adjusting direction (R-R) for varying its relative position with respect to the handle (72), defining a ratio adjusting axis (Q-Q) parallel to the central axis (P-P); wherein a ratio adjusting distance (d2) is defined between the central axis (P-P) and the ratio adjusting axis (Q-Q); wherein the ratio adjustment device (4) is configured to vary the ratio adjusting distance (d2) by moving the ratio adjusting body (41) along the ratio adjusting direction (R-R).

10. The actuation device according to claim 9 **characterized in that** the ratio adjustment device (4) comprises a ratio adjusting screw (42) threaded to the ratio adjusting body (41), wherein the rotation (R2) of the ratio adjusting screw (42) about the ratio adjusting direction (R-R) causes the movement of the ratio adjusting body (41) along said ratio adjusting direction (R-R).

11. The actuation device according to any of claims 9 to 10 **characterized in that** the ratio adjustment device (4) comprises a shaft (43) that crosses perpendicularly the ratio adjusting body (41) through a pass-through hole (44) disposed in said ratio adjusting body (41) and through the slotted hole (74), wherein the ratio adjusting axis (Q-Q) is the axis of the shaft (43).

12. The actuation device according to any of claims 9 to 11 **characterized in that** the pump actuating direction (X-X) and the ratio adjusting direction (R-R) are arranged on the same plane (P).

13. The actuation device according to any of claims 9 to 12 **characterized in that** the ratio adjustment device (4) is manually operated without needing tools.

14. The actuation device according to any of claims 8 to 13 **characterized in that** it comprises a lever adjustment device (5) arranged on the lever portion (7), comprising:
- a bushing (51) lodged in the circular housing or hole (73), configured to rotate about the central axis (P-P) of said circular housing or hole (73); and
- a threaded hole (52) that crosses the bushing (51) in a lever adjusting direction (S-S), wherein the pushing rod (8) is threaded to said threaded hole (52); wherein the rotation (R3) of the pushing rod (8) about the lever adjusting direction (S-S) causes its movement along said lever adjusting direction (S-S);
wherein a lever adjusting distance (d3) is defined between the handle (72) and a handle grip (H) of the vehicle; wherein the lever adjustment device (5) is configured to vary the lever adjusting distance (d3) by moving the pushing rod (8) along the lever adjusting direction (S-S).

15. The actuation device according to claim 14 **characterized in that** the pump actuating direction (X-X) and the lever distance adjusting direction (S-S) are arranged on the same plane (P).

16. The actuation device according to any of claims 8 to 15 **characterized in that** the lever portion (7) is detachable from the pump assembly (2).

17. The actuation device according to claims 11 and 16 **characterized in that** it comprises a lever disassembling device (9) configured to detach the lever portion (7) from the pump assembly (2), comprising:
- a retention clip (91) configured to hold the shaft (43) on the lever body (71) by embracing said shaft (43) with said retention clip (91), and to release it by pulling the retention clip (91);
wherein the shaft (43) comprises:
- a retaining end (431) having a retaining groove (432) configured to receive the retention clip (91); and
- a releasing end (433) having a protruding pin (434), wherein the shaft (43) is configured to move along the ratio adjusting axis (Q-Q) when the protruding pin (434) is pressed.
